# FASCICULE DE BREVET EUROPEEN

(11) **EP 2 011 582 B1**
(45) Date de publication et mention de la délivrance du brevet: **11.11.2009**
(21) Numéro de dépôt: 07111963.0
(22) Date de dépôt: 06.07.2007
(51) Int. Cl.: B21D 43/00, B23B 13/02, B23Q 7/04

(54) **Installation de chargement séquentiel de barres de matériau dans une machine d'usinage**
Vorrichtung zum sequentiellen Zuführen von Stangen zu einer Bearbeitungsmaschine
Installation for sequential loading of bar material in a processing machine

(43) Date de publication de la demande: 07.01.2009
(73) Titulaire: LNS S.A., 2534 Orvin (CH)
(72) Inventeur: Schärer, Rolf, 2534 Orvin (CH)
(74) Mandataire: BOVARD AG

(56) Documents cités:
- EP-A- 0 587 248
- EP-A- 0 737 542
- EP-A- 1 291 127
- EP-A- 1 574 285
- CH-A5- 672 446
- US-A1- 2002 183 888

## Description

L'invention se rapporte à une installation pour le chargement séquentiel de barres de matériau dans une machine pour l'usinage de ces barres, selon le préambule de la revendication 1.

Dans le domaine de la fabrication mécanique, il est connu de produire des pièces sur des machines de tournage automatiques, à partir de barres de matériau, et ce, en procédant à des usinages successifs de portions longitudinales de ces barres.

Les installations du type précité sont connues dans ce domaine, sous le nom de "ravitailleurs de barres" et servent au ravitaillement de telles machines automatiques de tournage qui sont utilisées en production industrielle.

Le sous-ensemble fonctionnel qui, dans une telle machine, accueille une barre est un sous-ensemble rotatif de configuration sensiblement tubulaire, appelé broche.

Les installations du type précité comprennent des dispositifs fonctionnels qui permettent d'assurer différentes fonctions dont notamment :
- une fonction combinant des actions de soutien et/ou de guidage d'une barre, notamment pendant sa rotation, et ce, au cours d'un déplacement en translation de cette barre selon un axe de guidage, notamment sensiblement coaxial au sous-ensemble fonctionnel de la machine qui doit être traversé par ladite barre, afin d'être présentée à un système d'outils situé dans cette machine :
- une fonction de stockage d'une pluralité de barres,
- une fonction de sélection et de prélèvement d'une barre,
- une fonction de déplacement en translation de la barre sélectionnée, de manière à engendrer sélectivement,
   - le déplacement de cette barre de manière à la disposer dans une position dite d'attente de chargement,
   - la poussée fractionnée de la barre, notamment à travers la machine, depuis ladite position dite d'attente de chargement jusqu'à ce qu'un nombre déterminé de pièces ait été réalisé,
   - éventuellement, l'extraction de la machine d'un segment de barre qui n'aurait pas été utilisé dans cette machine et le déplacement dudit segment de barre non utilisé, communément dit « chute », jusqu'à une dernière position, telle celle d'un poste d'évacuation de ce segment de barre.

Ce type d'installation comprend un organe allongé qui, appelé poussoir :
- présente une extrémité qui, appelée extrémité avant, est destinée à exercer une action sur l'une des extrémités opposées d'une barre afin de pouvoir assurer son déplacement,
- est placé sous le contrôle d'un dispositif appelé premier dispositif et capable d'assurer le déplacement de ce poussoir en translation dans deux sens opposés, dit premier sens et second sens, de manière à déplacer l'extrémité avant et pouvoir,
   - dans le premier sens, amener cette extrémité avant au contact d'une première extrémité d'une barre préalablement alignée avec le poussoir, pour qu'au plus tard après que la barre ait été, par une seconde extrémité, engagée par l'entrée d'un passage que la machine présente dans l'alignement de sa broche et jusque dans un composant de la broche, appelée nez de broche, et au niveau duquel ladite barre peut être maintenue fermement en vue d'autoriser l'usinage d'une fraction qui dépasse de ce nez de broche,
   - également dans le premier sens, déplacer séquentiellement l'extrémité avant de manière à déplacer la barre par fraction de sa longueur, notamment, afin que des produits puissent être successivement usinés puis prélevés dans cette barre,
   - dans le second sens, extraire l'extrémité avant de la broche, de manière à autoriser un nouveau déplacement de l'extrémité avant dans le premier sens vers une extrémité d'une nouvelle barre préalablement alignée sur l'extrémité avant, à savoir, un nouveau cycle d'opérations de chargement et de déplacement d'une barre.

Eventuellement l'extrémité avant du poussoir est pourvue d'un élément de préhension qui, appelé pince, est destiné à venir enserrer l'extrémité coopérante de la barre afin d'assurer une liaison temporaire en translation avec cette barre.

Ainsi, lorsqu'un tronçon de barre qui n'est pas utilisable, il peut être extrait de la broche pour être amené à un poste appelé poste d'éjection permettant d'en effectuer l'éjection de manière à autoriser un nouveau déplacement de la pince dans le premier sens vers une extrémité d'une nouvelle barre alignée sur cette pince, à savoir, un nouveau cycle d'opérations de chargement et de déplacement d'une barre.

Sur le poussoir, on distingue deux zones voisines, dont une première zone de poussoir, appelée zone avant, et destinée à être engagée dans la broche et une seconde zone de poussoir qui, appelée zone arrière, est reliée au dispositif dit premier dispositif.

La zone avant a une longueur qui est au moins suffisante pour déplacer l'extrémité avant du poussoir entre l'entrée du passage aligné sur la broche et sensiblement le nez de broche.

La zone arrière a une longueur qui est au moins suffisante pour assurer la liaison avec un mécanisme de manoeuvre du poussoir.

En général, l'installation est située au plus près de la machine, ce qui permet de limiter la longueur totale du poussoir et aussi la dimension longitudinale de l'installation, cette dimension longitudinale de l'installation correspondant d'ailleurs sensiblement à la longueur totale du poussoir.

Les installations sont donc toutes étudiées et construites pour charger des barres dont la longueur maximale est déterminée, et ce, dans des machines dont la distance qui sépare l'entrée du passage aligné sur la broche et le nez de broche a une valeur nominale qui est déterminée.

Afin de simplifier le texte, l'expression "la distance qui sépare l'entrée du passage aligné sur la broche et le nez de broche" est ci-après remplacée par l'expression "distance de chargement".

Les installations ont cependant chacune une certaine plage de fonctionnement, c'est-à-dire qu'elles peuvent fonctionner avec différentes machines d'usinage dont la valeur nominale de distance de chargement peut être comprise entre deux valeurs limites déterminées.

Une installation donnée est donc prévue pour fonctionner avec une certaine catégorie de machines d'usinage ayant toutes une distance de chargement qui est comprise entre deux valeurs limites déterminées.

Ces valeurs limites définissent un intervalle de tolérance de possible fonctionnement d'une installation donnée.

La valeur de cet intervalle de tolérance peut être d'une dizaine de centimètres.

Lorsque, pour une raison qui ne sera exposée, le constructeur d'une machine donnée augmente la distance de chargement au-delà de l'intervalle de tolérance de fonctionnement possible de l'installation prévue pour cette machine, le constructeur d'installation a le choix de modifier l'installation existante ou d'en construire une autre capable d'alimenter la machine modifiée.

Un résultat que l'invention vise à obtenir est une installation du type précité qui est capable de continuer à fonctionner avec une machine dont le constructeur augmente la distance de chargement au-delà de la valeur de l'intervalle de tolérance de fonctionnement que présentent normalement les installations prévues pour cette machine.

Un autre résultat que l'invention vise à obtenir réside dans la simplicité des modifications à apporter à une installation existante pour lui permettre de continuer à assurer sa fonction dans les conditions précitées.

Ces résultats sont atteints par une installation selon la revendication 1.

D'autres résultats apparaîtront à la lecture de la description ci-après faite à titre d'exemple en regard du dessin ci-annexé qui représente schématiquement :
Figure 1 : vue latéralement, une installation selon l'invention et une machine qui est associée à cette installation,
Figures 2 à 9 : le poussoir de l'installation de la figure 1, vu latéralement et localement, lors de différentes phases fonctionnelles de son fonctionnement,

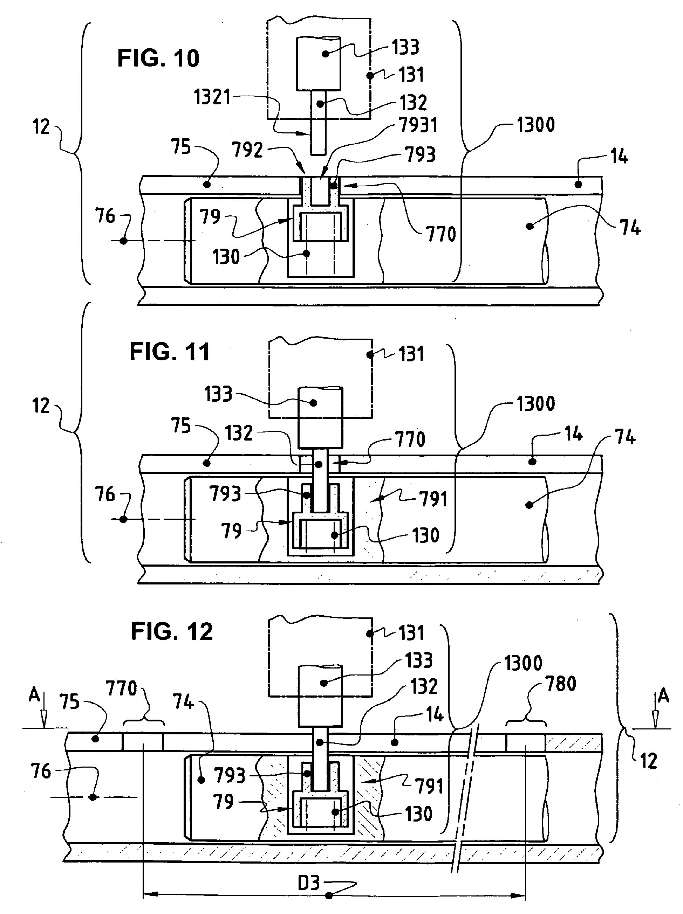

Figures 10 à 12 : le poussoir de l'installation des figures 1 à 9, vu en coupe transversale locale et dans différentes configurations de fonctionnement,

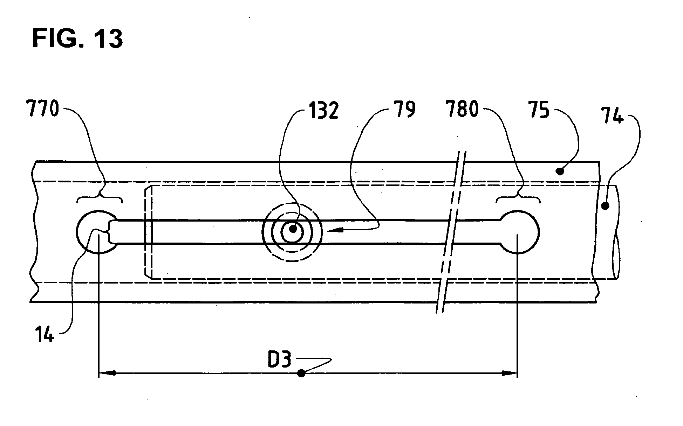

Figure 13 : une vue selon A de la figure 12.

En se reportant au dessin, on voit une installation 1 pour le chargement séquentiel de barres de matériau, appelées barres 2, dans une machine 4 pour l'usinage de ces barres 2.

La machine 4 est uniquement symbolisée et ne sera pas décrite en détails.

Non limitativement, on voit que l'installation 1 permet le chargement séquentiel de barre 2 dans un sous-ensemble fonctionnel 3 de la machine 4.

Le sous-ensemble fonctionnel 3 est par exemple une broche.

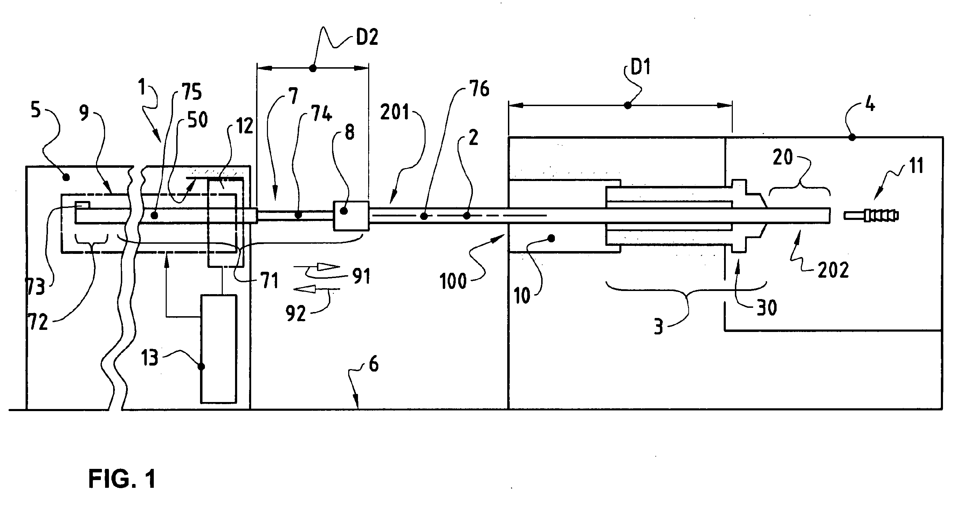

On voit que l'installation 1 comprend un bâti 5 qui, comme la machine 4, prend appui sur une surface, notamment, sensiblement horizontale, tel le sol (symbolisé par un trait sur la figure 1).

De préférence, le bâti 5 de l'installation 1 prend appui au sol 6 par un piètement (non représenté) de type réglable en hauteur, en vue du réglage en hauteur de l'installation par rapport à la machine 4 et, notamment, par rapport à la broche 3 de cette machine 4.

Tel que cela a été indiqué plus avant, ce type d'installation 1 comprend un organe allongé qui, appelé poussoir 7 :
- présente une extrémité qui, appelée extrémité avant 8, est destinée à exercer une action sur l'une des extrémités opposées d'une barre 2, appelée première extrémité 201, afin de pouvoir assurer le déplacement en translation de cette barre 2,
- est placé sous le contrôle d'un dispositif appelé premier dispositif 9 et capable d'assurer le déplacement de ce poussoir 7 en translation dans deux sens opposés, dit premier sens 91 et second sens 92, de manière à déplacer l'extrémité avant 8, dans le premier sens 91, vers l'intérieur de la machine 4 ou, dans le second sens 92, vers l'intérieur de l'installation 1 et pouvoir,
   - dans le premier sens 91, amener cette extrémité avant 8 au contact de la première extrémité 201 d'une barre 2 préalablement alignée avec le poussoir 7 et assurer un contact avec cette première extrémité 201, pour qu'au plus tard après que la barre 2 ait été, par une autre extrémité appelée seconde extrémité 202, engagée par l'entrée 100 d'un passage 10 que la machine 4 présente dans l'alignement de sa broche 3 et jusque dans un composant de la broche 3, appelé nez de broche 30, et au niveau duquel ladite barre 2 peut être maintenue fermement en vue d'autoriser l'usinage d'une fraction 20 qui dépasse de ce nez de broche 30,
   - également dans le premier sens 91, déplacer séquentiellement l'extrémité avant 8 de manière à déplacer la barre 2 par fraction de sa longueur, notamment, afin que des produits 11 puissent être successivement usinés puis prélevés dans cette barre 2,
   - dans le second sens 92, extraire de la machine 4 l'extrémité avant 8 du poussoir 7 de manière à, ensuite, autoriser un nouveau déplacement de l'extrémité avant 8 dans le premier sens 91 vers une première extrémité 201 d'une nouvelle barre 2 préchargée, c'est-à-dire préalablement alignée sur cette extrémité avant 8 en vue d'un nouveau cycle d'opérations de chargement et de déplacement d'une barre 2.

Eventuellement l'extrémité avant 8 du poussoir 7 est pourvue d'un élément de préhension qui, appelé pince (non représentée en détail), est destiné à venir enserrer la première extrémité 201 de la barre 2 afin d'assurer une liaison temporaire en translation avec cette barre 2.

Dans ce cas, la pince est classiquement une pince de type autorisant un accouplement élastique avec la première extrémité 201 de la barre 2.

Ainsi, lorsqu'un tronçon de barre 2 qui n'est pas utilisable, il peut être extrait de la broche pour être amené à un poste appelé poste d'éjection permettant d'en effectuer l'éjection de manière à autoriser un nouveau déplacement de l'extrémité avant 8 dans le premier sens 91 vers une première extrémité 201 d'une nouvelle barre 2 préalablement alignée sur cette extrémité avant 8, à savoir, un nouveau cycle d'opérations de chargement et de déplacement d'une barre 2 dans la machine 4.

Tel que cela a déjà été annoncé, afin de simplifier le texte, l'expression "*la distance qui sépare l'entrée 100 du passage 10 aligné sur la broche 3 et le nez de broche 30*" est ci-après remplacée par l'expression distance de chargement D1.

Sur le poussoir 7, on distingue deux zones voisines, dont une première zone de poussoir 7, appelée zone avant 71, et destinée à être engagée dans la machine 4 et sa broche 3 et une seconde zone de poussoir 7 qui, appelée zone arrière 72, est reliée au premier dispositif 9.

La zone avant 71 a une longueur qui, appelée longueur utilisable du poussoir 7, est au moins suffisante pour déplacer l'extrémité avant 8 entre, d'une part, l'entrée 100 du passage 10 aligné sur la broche 3 et, d'autre part, sensiblement le nez de broche 30.

La zone arrière 72 a une dimension longitudinale qui est au moins suffisante pour assurer la liaison avec un organe mobile 73 du premier dispositif 9.

De manière notable :
- le poussoir 7 comprend au moins une première partie 74 qui présente l'extrémité avant 8 et une seconde partie 75 qui est reliée au premier dispositif 9 et ces deux parties, appelées ensemble parties coulissantes 74, 75, sont montées coulissantes l'une dans l'autre de manière à être mobiles l'une par rapport à l'autre selon un axe appelé axe de coulissement 76, et ce, entre deux situations dont,
   - une première situation qui, appelée situation de contraction 77, correspond à une situation dans laquelle l'une (74) desdites parties coulissantes 74, 75 est rétractée dans l'autre (75), conférant au poussoir 7 une longueur utilisable d'une valeur minimale, et
   - une seconde situation qui, appelée situation d'extension 78, correspond à une situation dans laquelle l'une (74) desdites parties coulissantes 74, 75 s'étend partiellement en dehors de l'autre (75), et ce, sur une distance d'extension D2 dont la valeur est prédéterminée, conférant au poussoir 7 une longueur utilisable d'une valeur maximale.

On considère que l'homme de l'art est à même de choisir la distance d'extension D2 d'une manière telle que le poussoir 7 puisse assurer la fonction recherchée de chargement de barre 2 dans une machine 4 dont la distance de chargement D1 est donnée, c'est-à-dire connue.

Il est aussi considéré que l'homme de l'art positionne implicitement l'installation 1 à une distance de la machine 4 qui permet d'exploiter les caractéristiques de cette installation 1.

Pour mémoire, la dimension du poussoir 7 qui est appelée "longueur utilisable du poussoir 7" correspond à la dimension longitudinale de la zone avant 71 du poussoir 7 qui peut-être effectivement utilisée pour pousser une barre 2 dans une machine 4 et sa broche 3.

De manière remarquable :
- les parties coulissantes 74, 75 sont placées sous le contrôle d'un dispositif commandé qui, appelé second dispositif 12, permet d'influencer la transition du poussoir 7 de sa situation de contraction 77 à sa situation d'extension 78 et, réciproquement,
- le premier dispositif 9 et le second dispositif 12 sont placés sous le contrôle d'un dispositif de commande qui, appelé troisième dispositif 13, permet au moins à l'issue d'une des deux opérations que sont, d'une part, l'opération de chargement de la barre 2 dans la machine 4 et, d'autre part, une opération de déplacement de la barre 2 dans ladite machine 4 d'une valeur, appelée première valeur, nécessaire à la réalisation d'un produit 11, de prendre en compte la longueur effective de cette barre 2 lors de l'opération considérée et de vérifier par calcul, si la longueur utilisable du poussoir 7 considéré en situation de contraction 77 est suffisante pour, assurer au moins l'une des deux opérations consistant à,
   - déplacer effectivement la barre 2 pour amener sa seconde extrémité 202 sensiblement jusque dans le nez de broche 30, et
   - déplacer effectivement la barre 2 d'une fraction de sa longueur qui correspond à la valeur nécessaire pour réaliser un produit 11, et
   si la longueur utilisable du poussoir en situation de contraction 77 est de valeur suffisante, alors, conserver une telle situation de contraction 77 et, au contraire, si la longueur utilisable est insuffisante, alors, commander la translation relative des parties coulissantes 74, 75 du poussoir 7 pour obtenir la situation d'extension 78 de ce poussoir 7.

Classiquement, l'installation 1 comporte un ensemble de pilotage des différents dispositifs fonctionnels qu'elle comprend et, avantageusement le troisième dispositif 13 est constitué par cet ensemble de pilotage.

L'expression "déplacer la barre 2 pour amener sa seconde extrémité 202 sensiblement jusque dans le nez de broche 30", signifie que la seconde extrémité 202 se trouve suffisamment engagé dans le nez de broche 30 pour autoriser la réalisation d'un produit 11, à savoir l'usinage d'un tel produit 11.

Ces caractéristiques techniques permettent d'obtenir le résultat essentiel visé par l'invention, à savoir une installation 1 du type précité qui, par sa construction, peut être adaptée pour fonctionner avec une machine 4 avec laquelle elle était initialement compatible, mais dont la distance de chargement D1 a été augmentée au delà d'un intervalle de tolérance de fonctionnement possible d'une l'installation 1 initialement prévue pour cette machine 4.

Par l'expression "permet d'influencer la transition du poussoir 7 de sa situation de contraction 77 à sa situation d'extension 78 et, réciproquement", on désigne une fonction consistant à :
- au moins à autoriser le passage de la situation de contraction 77 à la situation d'extension 78 et réciproquement,
- au plus à assurer le passage de la situation de contraction 77 à la situation d'extension 78 et réciproquement.

De manière notable :
- l'installation 1 est équipée d'un moyen fonctionnel, d'une part, de mesure de la longueur de chaque barre 2 qui doit être déplacée par le poussoir 7 et, d'autre part, de production d'un signal reflétant la longueur mesurée de cette barre 2, et
- le troisième dispositif 13 est quant à lui constitué de manière à,
   - exploiter le signal reflétant la longueur mesurée d'une barre 2 à charger dans la machine 4, et ce, pour calculer la longueur effective de cette barre 2 en fonction du nombre de produits 11 prélevés dans ladite barre 2,
   - exploiter une information reflétant la valeur de la distance qui sépare l'entrée 100 du passage 10 aligné sur la broche 3 et le nez de broche 30, à savoir la valeur de la distance de chargement D1,
   - exploiter une information reflétant la valeur de la longueur utilisable du poussoir 7 lors d'une opération donnée, c'est-à-dire la valeur maximale ou la valeur minimale selon que le poussoir est en situation d'extension 78 ou en situation de contraction 77.

Les informations reflétant, d'une part, la valeur de la distance de chargement D1 et, d'autre part, les valeurs maximale et minimale de la longueur utilisable du poussoir 7 sont placées dans une mémoire.

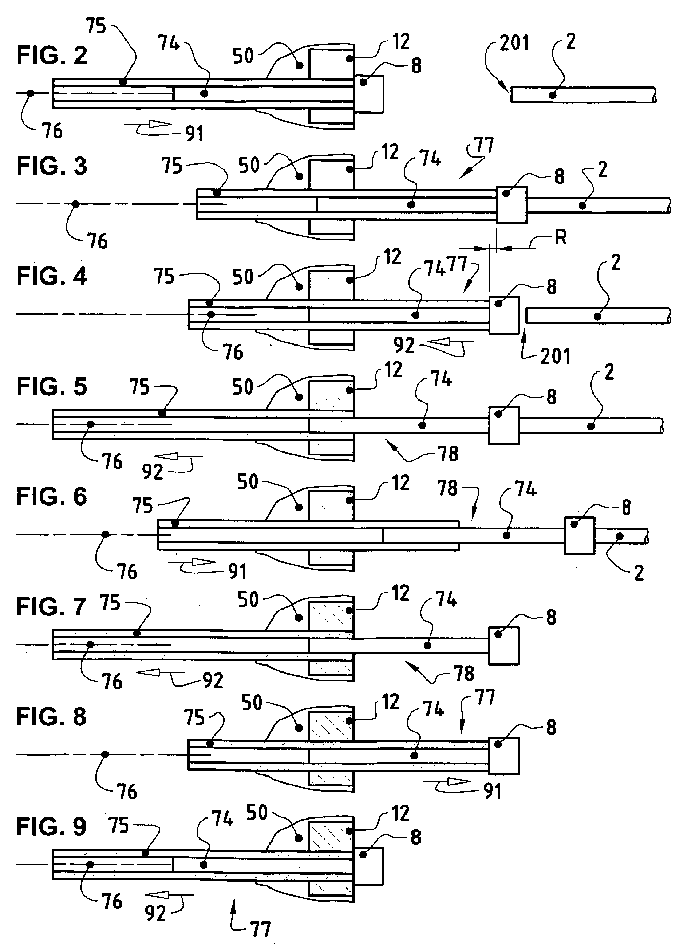

Bien que cela n'apparaisse pas sur les figures, c'est le troisième dispositif 13 qui commande le premier dispositif 9 et le second dispositif 12 de manière telle qu'ils assurent une phase fonctionnelle de chargement d'une barre 2, c'est-à-dire une phase fonctionnelle consistant à placer une barre 2 avec sa première extrémité 201 dans l'alignement du poussoir 7 en vis à vis de l'extrémité avant 8 du poussoir 7 (situation représentée en figure 2).

De manière remarquable, le second dispositif 12 permet d'influencer la transition du poussoir 7 d'une de ses deux situations appelées situation de contraction 77 et situation d'extension 78 en entravant ou en autorisant la translation relative de ces parties coulissantes 74, 75 sous l'effet d'actions extérieures qui tendent à engendrer des déplacements relatifs desdites parties coulissantes 74, 75.

Ces particularités techniques permettent d'envisager un fonctionnement sans devoir recourir à un organe moteur dédié à cette fonction.

De manière remarquable, pour permettre au poussoir 7 d'adopter la situation d'extension 78, le premier dispositif 9 et le second dispositif 12 sont placés sous le contrôle d'un dispositif de commande qui, appelé troisième dispositif 13, permet de les commander de manière telle qu'ils assurent au moins les phases fonctionnelles suivantes :
- une première phase fonctionnelle au cours de laquelle, d'une part, l'extrémité avant 8 étant située à l'extérieur de la machine 4 et, d'autre part, la seconde partie 75 du poussoir 7 étant en situation de contraction 77 et immobilisée en cette position, le poussoir 7 est déplacé dans le premier sens 91 afin d'amener l'extrémité avant 8 au contact de la première extrémité 201 de la barre 2,
- une seconde phase fonctionnelle au cours de laquelle, la barre 2 est déplacée dans la machine 4 au moins jusqu'à atteindre une valeur de déplacement au moins égale à la distance d'extension D2 de la première partie 74 et de la seconde partie 75 du poussoir 7,
- une troisième phase fonctionnelle au cours de laquelle les deux parties coulissantes 74, 75 sont libérées en translation relative mais la première partie 74 du poussoir 7 est immobilisée en translation relativement à un support 50 qui est fixe par rapport au poussoir 7,
- une quatrième phase fonctionnelle au cours de laquelle, le déplacement du poussoir 7 est commandé dans le second sens 92 afin de provoquer un déplacement relatif des parties coulissantes 74, 75 jusqu'à leur situation d'extension 78,
- une cinquième phase fonctionnelle au cours de laquelle, les parties coulissantes 74, 75 étant placées en situation d'extension 78, ces parties coulissantes 74, 75 sont immobilisées en translation relative,
- une sixième phase fonctionnelle au cours de laquelle, le poussoir 7 est déplacé de manière à reprendre l'alimentation de la machine 4.

De manière notable, le troisième dispositif 13 permet de commander le premier dispositif 9 et le second dispositif 12 de manière telle qu'au moins l'une des opérations consistant à,
- déplacer effectivement la barre 2 pour amener sa seconde extrémité 202 sensiblement jusque dans le nez de broche 30, et
- déplacer effectivement la barre 2 d'une fraction de sa longueur qui correspond à la valeur nécessaire pour réaliser un produit 11,
soit suivie par une opération consistant à déplacer le poussoir 7 dans le second sens 92 d'une valeur R prédéterminée et au moins suffisante pour supprimer le contact entre la première extrémité 201 de la barre 2 et l'extrémité avant 8 du poussoir 7.

Ces particularités techniques permettent de supprimer d'éventuelles contraintes axiales induites dans la barre 2 lors de son déplacement.

Le support 50 est avantageusement un sous-ensemble solidaire du bâti 5 de l'installation 1.

Les caractéristiques techniques énoncées ci-dessus permettent de construire une installation 1 du type précité qui peut être adaptée pour charger une barre 2 dans une machine 4 avec laquelle elle était initialement compatible, mais dont la distance de chargement D1 a été augmentée au-delà d'un intervalle de tolérance (non représenté) de fonctionnement possible d'une installation 1 initialement prévue pour cette machine 4.

La distance d'extension D2 est choisie pour être supérieure à la valeur de l'augmentation de la distance de chargement D1.

Tel que cela a déjà été annoncé, l'installation 1 comporte un ensemble de pilotage des différents dispositifs fonctionnels qu'elle comprend et, avantageusement le troisième dispositif 13 est constitué par cet ensemble de pilotage.

De manière notable, le troisième dispositif 13 commande le premier dispositif 9 et le second dispositif 12 de manière telle qu'ils assurent au moins les phases fonctionnelles suivantes :
- une septième phase fonctionnelle au cours de laquelle, le poussoir 7 est déplacé dans le second sens 92 en vue d'extraire l'extrémité avant 8 de la machine 4,
- une huitième phase fonctionnelle au cours de laquelle les parties coulissantes 74, 75 sont libérées en translation relative, mais la première partie 74 du poussoir 7 est immobilisée par rapport au support 50,
- une neuvième phase fonctionnelle au cours de laquelle, le déplacement du poussoir 7 est commandé dans le premier sens 91 afin de provoquer, d'une part, un déplacement relatif des parties coulissantes 74, 75 jusqu'à leur situation de contraction 77 et, d'autre part, l'immobilisation relative de ces parties coulissantes 74, 75 en cette situation de contraction 77,
- une dixième phase fonctionnelle au cours de laquelle, le poussoir 7 est déplacé dans le second sens 92 de manière à être replacé dans une position permettant un nouveau cycle de chargement d'une barre 2 dans la machine 4, à savoir, la position depuis laquelle il est déplacé au cours de la première phase fonctionnelle.

Par cela les parties coulissantes 74, 75 du poussoir 7 peuvent être déplacées l'une relativement à l'autre dans les deux sens opposés que sont le premier sens 91 et le second sens 92, entre la position d'extension à la position de contraction, sans qu'il y ait lieu de prévoir un organe moteur spécial pour les déplacer, tel un vérin pneumatique ou autre.

Le troisième dispositif 13 commande le premier dispositif 9 et le second dispositif 12 de manière telle qu'ils assurent au moins une onzième phase fonctionnelle qui est située entre la septième phase fonctionnelle et la dixième phase fonctionnelle et selon laquelle, l'extrémité avant 8 qui porte une pince est placée à un poste appelé poste d'éjection (non représenté) au niveau duquel le tronçon de barre 2 non utilisable peut être extrait de ladite pince.

Cela permet de préserver le fonctionnement classique de l'installation 1.

Le troisième dispositif 13 commande le premier dispositif 9 et le second dispositif 12 de manière à, lors de la troisième phase fonctionnelle, immobiliser la première partie 74 du poussoir 7 par rapport au support 50.

Le troisième dispositif 13 commande le premier dispositif 9 et le second dispositif 12 de manière à, lors de la huitième phase fonctionnelle, immobiliser la première partie 74 du poussoir 7 par rapport au support 50 et libérer les deux parties coulissantes 74, 75 en translation relative.

Selon une forme de réalisation du second dispositif 12 :
- l'une des parties coulissantes 74, 75 porte au moins deux butées, appelées ensemble butées exerçant une fonction d'arrêt en translation selon l'axe de coulissement 76 et ces butées, appelées l'une butée de contraction 770 et l'autre butée d'extension 780, sont disposées avec un certain écartement D3 pour définir chacune, respectivement la situation de contraction 77 et la situation d'extension 78,
- l'autre partie coulissante est équipée d'un élément, appelé élément d'immobilisation 79, destiné à venir coopérer sélectivement avec la butée de contraction 770 et la butée d'extension 780 de manière à immobiliser les deux parties coulissantes 74, 75 l'une par rapport à l'autre,
- l'élément d'immobilisation 79 est,
   - escamotable entre une première position 791 dans laquelle il autorise le coulissement relatif des deux parties coulissantes 74, 75 et une seconde position 792 dans laquelle, il peut, par une partie mâle, appelée première partie mâle 793, coopérer avec l'une des deux butées que sont la butée de contraction 770 et la butée d'extension 780 et ainsi entraver le coulissement relatif desdites parties coulissantes 74, 75,
   - associé à un moyen d'actionnement 1300 entre, d'une part, la seconde position 792 dans laquelle il coopère avec l'une des deux butés d'arrêt sont la butée de contraction 770 et la butée d'extension 780 pour ainsi entraver le coulissement relatif des parties coulissantes 74, 75 et, d'autre part, la première position 791 où il est libéré de l'une quelconque desdites butées pour ainsi autoriser le coulissement des deux parties coulissantes 74, 75.
      Ces caractéristiques techniques permettent de garantir la parfaite immobilisation en translation relative des parties coulissantes du poussoir ou au contraire de garantir qu'elles sont effectivement libres en translation relative.

Suivant une forme préférée de réalisation :
- les parties coulissantes 74, 75, à savoir, la première partie 74 et la seconde partie 75 sont constituées par des pièces au moins partiellement creuses, la première partie 74 étant montée coulissante dans la seconde partie 75,
- la seconde partie 75 porte les deux butées que sont la butée de contraction 770 et la butée d'extension 780 et chacune de ces deux butées est constituée par la face latérale d'une perforation réalisée dans la paroi de ladite seconde partie 75 de manière à constituer une butée d'arrêt en translation selon l'axe de coulissement 76,
- la première partie 74 abrite intérieurement l'élément d'immobilisation 79 d'une manière telle que cet élément d'immobilisation 79 est mobile dans un plan radial à l'axe de coulissement 76, et ce, entre les deux situations appelées première position 791 et seconde position 792, dont
   - une première position 791 dans laquelle il ne coopère avec aucune des deux butées que sont la butée de contraction 770 et la butée d'extension 780 et autorise ainsi le coulissement relatif des deux parties coulissantes 74, 75, et
   - une seconde position 792 dans laquelle il coopère avec l'une des deux butées et entrave ainsi le coulissement relatif desdites première partie 74 et seconde partie 75,
- le moyen d'actionnement 1300 comprend, d'une part, un organe élastique 130 qui sollicite l'élément d'immobilisation 79 vers sa seconde position 792 et, d'autre part, un appareil d'actionnement 131 qui est commandé pour déplacer l'élément d'immobilisation 79 dans sa première position 791.

L'organe élastique 130 consiste avantageusement en un ressort.

Ces caractéristiques permettent d'adapter facilement un poussoir existant.

L'appareil d'actionnement 131 est porté par le support 50 et comprend :
- d'une part, un organe qui, appelé organe d'actionnement 132, est disposé pour agir sur l'élément d'immobilisation 79 à travers au moins l'une des perforations de la paroi de la seconde partie 75 et déplacer cet élément d'immobilisation 79 de sa seconde position 792 vers sa première position 791,
- d'autre part, un autre organe, qui appelé organe moteur 133, est de type commandé et est associé à l'organe d'actionnement 132 pour pouvoir le déplacer de manière telle, d'une part, qu'il pousse l'élément d'immobilisation 79 de sa seconde position 792 vers sa première position 791 et d'autre part, qu'il autorise le déplacement inverse de cet organe d'immobilisation 79 sous l'effet de l'organe élastique 130 qui le sollicite.

L'organe d'actionnement consiste avantageusement en un vérin.

Les deux perforations qui sont réalisées dans la paroi de la seconde partie 75 du poussoir 7 pour former les deux butées que sont la butée de contraction 770 et la butée d'extension 780, sont reliées par une rainure 14 et cette rainure 14, d'une part, est orientée selon l'axe de coulissement 76 et, d'autre part, a une dimension transversale ajustée à celle d'une partie mâle qui, appelée seconde partie mâle 1321, est portée par l'organe d'actionnement 132 de l'élément d'immobilisation 79 de manière telle que, lorsqu'il actionne l'élément d'immobilisation 79 dans sa première position 791, ladite seconde partie mâle 1321 coopère, d'une part, avec une portée femelle 7931 aménagée axialement dans la première partie mâle 793 de l'élément d'immobilisation 79 et, d'autre part, avec la rainure, et par cela, garantit à la fois :
- l'immobilisation en translation de la première partie 74 par rapport au support fixe 50, et
- l'orientation relative de la première partie 74 et de la seconde partie 75 autour de l'axe de coulissement 76, et ce, au moins entre la situation de contraction 77 et la situation d'extension 78 des deux parties coulissantes 74,75.

## Revendications

1. Installation (1) pour le chargement séquentiel de barres de matériau, appelées barres (2), dans une broche (3) d'une machine (4) pour l'usinage de ces barres (2), l'installation (1) comprenant un organe allongé qui, appelé poussoir (7) :
- présente une extrémité qui, appelée extrémité avant (8), est destinée à exercer une action sur l'une des extrémités opposées d'une barre (2), appelée première extrémité (201), afin de pouvoir assurer le déplacement en translation de cette barre (2),
- est placé sous le contrôle d'un dispositif appelé premier dispositif (9) et capable d'assurer le déplacement de ce poussoir (7) en translation dans deux sens opposés, dit premier sens (91) et second sens (92), de manière à déplacer l'extrémité avant (8), dans le premier sens (91), vers l'intérieur de la machine (4) ou, dans le second sens (92), vers l'intérieur de l'installation (1) et pouvoir,
• dans le premier sens (91), amener cette extrémité avant (8) au contact de la première extrémité (201) d'une barre (2) préalablement alignée avec le poussoir (7) et assurer un contact avec cette première extrémité (201), pour qu'au plus tard après que la barre (2) ait été, par une autre extrémité appelée seconde extrémité (202), engagée par l'entrée (100) d'un passage (10) que la machine (4) présente dans l'alignement de sa broche (3) et jusque dans un composant de la broche (3), appelé nez de broche (30), et au niveau duquel ladite barre (2) peut être maintenue fermement en vue d'autoriser l'usinage d'une fraction (20) qui dépasse de ce nez de broche (30),
• également dans le premier sens (91), déplacer séquentiellement l'extrémité avant (8) de manière à déplacer la barre (2) par fraction de sa longueur, notamment, afin que des produits (11) puissent être successivement usinés puis prélevés dans cette barre (2),
• dans le second sens (92), extraire de la machine (4) l'extrémité avant (8) du poussoir (7) de manière à, ensuite, autoriser un nouveau déplacement de l'extrémité avant 8 dans le premier sens (91) vers une première extrémité (201) d'une nouvelle barre (2) préchargée, c'est-à-dire préalablement alignée sur cette extrémité avant (8) en vue d'un nouveau cycle d'opérations de chargement et de déplacement d'une barre (2),
- le poussoir (7) comprenant au moins une première partie (74) qui présente l'extrémité avant (8) et une seconde partie (75) qui est reliée au premier dispositif (9) et ces deux parties, appelées ensemble parties coulissantes (74), (75), sont montées coulissantes l'une dans l'autre de manière à être mobiles l'une par rapport à l'autre selon un axe appelé axe de coulissement (76), et ce, entre deux situations dont,
• une première situation qui, appelée situation de contraction (77), correspond à une situation dans laquelle l'une (74) desdites parties coulissantes (74), (75) est rétractée dans l'autre (75), conférant au poussoir (7) une longueur utilisable pour déplacer l'extrémité avant (8) entre l'entrée (100) du passage (10) aligné sur la broche (3) et le nez de broche (30), qui est d'une valeur minimale, et
• une seconde situation qui, appelée situation d'extension (78), correspond à une situation dans laquelle l'une (74) desdites parties coulissantes (74), (75) s'étend partiellement en dehors de l'autre (75), et ce, sur une distance d'extension (D2) dont la valeur est prédéterminée, conférant au poussoir (7) une longueur utilisable d'une valeur maximale,
cette installation étant **caractérisée en ce que :**
- les parties coulissantes (74), (75) sont placées sous le contrôle d'un dispositif commandé qui, appelé second dispositif (12), permet d'influencer la transition du poussoir (7) de sa situation de contraction (77) à sa situation d'extension (78) et, réciproquement,
- le premier dispositif (9) et le second dispositif (12) sont placés sous le contrôle d'un dispositif de commande qui, appelé troisième dispositif (13), permet au moins à l'issue d'une des deux opérations que sont, d'une part, l'opération de chargement de la barre (2) dans la machine (4) et, d'autre part, une opération de déplacement de la barre (2) dans ladite machine (4) d'une valeur, appelée première valeur, nécessaire à la réalisation d'un produit (11), de prendre en compte la longueur effective de cette barre (2) lors de l'opération considérée et de vérifier par calcul, si la longueur utilisable du poussoir (7) considéré en situation de contraction (77) est suffisante pour, assurer au moins l'une des deux opérations consistant à,
• déplacer effectivement la barre (2) pour amener sa seconde extrémité (202) sensiblement jusque dans le nez de broche (30), et
• déplacer effectivement la barre (2) d'une fraction de sa longueur qui correspond à la valeur nécessaire pour réaliser un produit (11), et
si la longueur utilisable du poussoir en situation de contraction (77) est de valeur suffisante, alors, conserver une telle situation de contraction (77) et, au contraire, si la longueur utilisable est insuffisante, alors, commander la translation relative des parties coulissantes (74), (75) du poussoir (7) pour obtenir la situation d'extension (78) de ce poussoir (7).

2. Installation selon la revendication 1, **caractérisée en ce que :**
- d'une part, elle (1) est équipée d'un moyen fonctionnel, d'une part, de mesure de la longueur de chaque barre (2) qui doit être déplacée par le poussoir (7) et, d'autre part, de production d'un signal reflétant la longueur mesurée de cette barre (2), et
- d'autre part, le troisième dispositif (13) est quant à lui constitué de manière à,
• exploiter le signal reflétant la longueur mesurée d'une barre (2) à charger dans la machine (4), et ce, pour calculer la longueur effective de cette barre (2) en fonction du nombre de produits (11) prélevés dans ladite barre (2),
• exploiter une information reflétant la valeur de la distance qui sépare l'entrée (100) du passage (10) aligné sur la broche (3) et le nez de broche (30), à savoir la valeur de la distance de chargement (D1),
• exploiter une information reflétant la valeur de la longueur utilisable du poussoir (7) lors d'une opération donnée, c'est-à-dire la valeur maximale ou la valeur minimale selon que le poussoir est en situation d'extension (78) ou en situation de contraction (77).

3. Installation selon la revendication 1 ou 2, **caractérisée en ce que** le second dispositif (12) permet d'influencer la transition du poussoir (7) d'une de ses deux situations appelées situation de contraction (77) et situation d'extension (78) en entravant ou en autorisant la translation relative de ces parties coulissantes (74), (75) sous l'effet d'actions extérieures qui tendent à engendrer des déplacements relatifs desdites parties coulissantes (74), (75).

4. Installation selon l'une des revendications 1 à 3, **caractérisée en ce que** pour permettre au poussoir (7) d'adopter la situation d'extension (78), le premier dispositif (9) et le second dispositif (12) sont placés sous le contrôle d'un dispositif de commande qui, appelé troisième dispositif (13), permet de les commander de manière telle qu'ils assurent au moins les phases fonctionnelles suivantes :
- une première phase fonctionnelle au cours de laquelle, d'une part, l'extrémité avant (8) étant située à l'extérieur de la machine (4) et, d'autre part, la seconde partie (75) du poussoir (7) étant en situation de contraction (77) et immobilisée en cette position, le poussoir (7) est déplacé dans le premier sens (91) afin d'amener l'extrémité avant (8) au contact de la première extrémité (201) de la barre (2),
- une seconde phase fonctionnelle au cours de laquelle, la barre (2) est déplacée dans la machine (4) au moins jusqu'à atteindre une valeur de déplacement au moins égale à la distance d'extension (D2) de la première partie (74) et de la seconde partie (75) du poussoir (7),
- une troisième phase fonctionnelle au cours de laquelle les deux parties coulissantes (74), (75) sont libérées en translation relative mais la première partie (74) du poussoir (7) est immobilisée en translation relativement à un support (50) qui est fixe par rapport au poussoir (7),
- une quatrième phase fonctionnelle au cours de laquelle, le déplacement du poussoir (7) est commandé dans le second sens (92) afin de provoquer un déplacement relatif des parties coulissantes (74), (75) jusqu'à leur situation d'extension (78),
- une cinquième phase fonctionnelle au cours de laquelle, les parties coulissantes (74), (75) étant placées en situation d'extension (78), ces parties coulissantes (74), (75) sont immobilisées en translation relative,
- une sixième phase fonctionnelle au cours de laquelle, le poussoir (7 )est déplacé de manière à reprendre l'alimentation de la machine (4).

5. Installation selon l'une quelconque des revendications (1) à (4), **caractérisée en ce que** le troisième dispositif (13) permet de commander le premier dispositif (9) et le second dispositif (12) de manière telle qu'au moins l'une des opérations consistant à,
• déplacer effectivement la barre (2) pour amener sa seconde extrémité (202) sensiblement jusque dans le nez de broche (30), et
• déplacer effectivement la barre (2) d'une fraction de sa longueur qui correspond à la valeur nécessaire pour réaliser un produit (11),
soit suivie par une opération consistant à déplacer le poussoir (7) dans le second sens (92) d'une valeur (R) prédéterminée et au moins suffisante pour supprimer le contact entre la première extrémité (201) de la barre (2) et l'extrémité avant (8) du poussoir (7).

6. Installation selon l'une quelconque des revendications 4 à 5, **caractérisée en ce que** le troisième dispositif (13) commande le premier dispositif (9) et le second dispositif (12) de manière telle qu'ils assurent au moins les phases fonctionnelles suivantes :
- une septième phase fonctionnelle au cours de laquelle, le poussoir (7) est déplacé dans le second sens (92) en vue d'extraire l'extrémité avant (8) de la machine (4),
- une huitième phase fonctionnelle au cours de laquelle les parties coulissantes (74), (75) sont libérées en translation relative, mais la première partie (74) du poussoir (7) est immobilisée par rapport au support (50),
- une neuvième phase fonctionnelle au cours de laquelle, le déplacement du poussoir (7) est commandé dans le premier sens (91) afin de provoquer, d'une part, un déplacement relatif des parties coulissantes (74), (75) jusqu'à leur situation de contraction (77) et, d'autre part, l'immobilisation relative de ces parties coulissantes (74), (75) en cette situation de contraction (77),
- une dixième phase fonctionnelle au cours de laquelle, le poussoir (7) est déplacé dans le second sens (92) de manière à être replacé dans une position permettant un nouveau cycle de chargement d'une barre (2) dans la machine (4), à savoir, la position depuis laquelle il est déplacé au cours de la première phase fonctionnelle.

7. Installation selon la revendication 6, **caractérisée en ce que** le troisième dispositif (13) commande le premier dispositif (9) et le second dispositif (12) de manière telle qu'ils assurent au moins une onzième phase fonctionnelle qui est située entre la septième phase fonctionnelle et la dixième phase fonctionnelle et selon laquelle, l'extrémité avant (8) qui porte une pince est placée à un poste appelé poste d'éjection (non représenté) au niveau duquel le tronçon de barre (2) non utilisable peut être extrait de ladite pince.

8. Installation selon l'une quelconque des revendications 4 à 7, **caractérisée en ce que** le troisième dispositif (13) commande le premier dispositif (9) et le second dispositif (12) de manière à, lors de la troisième phase fonctionnelle, immobiliser la première partie (74) du poussoir (7) par rapport au support (50).

9. Installation selon l'une quelconque des revendications 4 à 8, **caractérisée en ce que** le troisième dispositif (13) commande le premier dispositif (9) et le second dispositif (12) de manière à, lors de la huitième phase fonctionnelle, immobiliser la première partie (74) du poussoir (7) par rapport au support (50) et libérer les deux parties coulissantes (74), (75) en translation relative.

10. Installation selon l'une quelconque des revendications 1 à 9, **caractérisée en ce que** pour réaliser le second dispositif (12) :
- l'une des parties coulissantes (74), (75) porte au moins deux butées, appelées ensemble butées exerçant une fonction d'arrêt en translation selon l'axe de coulissement (76) et ces butées, appelées l'une butée de contraction (770) et l'autre butée d'extension (780), sont disposées avec un certain écartement (D3) pour définir chacune, respectivement la situation de contraction (77) et la situation d'extension (78),
- l'autre partie coulissante est équipée d'un élément, appelé élément d'immobilisation (79), destiné à venir coopérer sélectivement avec la butée de contraction (770) et la butée d'extension (780) de manière à immobiliser les deux parties coulissantes (74), (75) l'une par rapport à l'autre,
- l'élément d'immobilisation (79) est,
• escamotable entre une première position (791) dans laquelle il autorise le coulissement relatif des deux parties coulissantes (74), (75) et une seconde position (792) dans laquelle, il peut, par une partie mâle, appelée première partie mâle (793), coopérer avec l'une des deux butées que sont la butée de contraction (770) et la butée d'extension (780) et ainsi entraver le coulissement relatif desdites parties coulissantes (74), (75),
• associé à un moyen d'actionnement (1300) entre, d'une part, la seconde position (792) dans laquelle il coopère avec l'une des deux butés d'arrêt sont la butée de contraction (770) et la butée d'extension (780) pour ainsi entraver le coulissement relatif des parties coulissantes (74), (75) et, d'autre part, la première position (791) où il est libéré de l'une quelconque desdites butées pour ainsi autoriser le coulissement des deux parties coulissantes (74), (75).

11. Installation selon la revendication 10, **caractérisée en ce que :**
- les parties coulissantes (74), (75), à savoir, la première partie (74) et la seconde partie (75) sont constituées par des pièces au moins partiellement creuses, la première partie (74) étant montée coulissante dans la seconde partie (75),
- la seconde partie (75) porte les deux butées que sont la butée de contraction (770) et la butée d'extension (780) et chacune de ces deux butées est constituée par la face latérale d'une perforation réalisée dans la paroi de ladite seconde partie (75) de manière à constituer une butée d'arrêt en translation selon l'axe de coulissement (76),
- la première partie (74) abrite intérieurement l'élément d'immobilisation (79) d'une manière telle que cet élément d'immobilisation (79) est mobile dans un plan radial à l'axe de coulissement (76), et ce, entre les deux situations appelées première position (791) et seconde position (792), dont
• une première position (791) dans laquelle il ne coopère avec aucune des deux butées que sont la butée de contraction (770) et la butée d'extension (780) et autorise ainsi le coulissement relatif des deux parties coulissantes (74), (75), et
• une seconde position (792) dans laquelle il coopère avec l'une des deux butées et entrave ainsi le coulissement relatif desdites première partie (74) et seconde partie (75),
- le moyen d'actionnement (1300) comprend, d'une part, un organe élastique (130) qui sollicite l'élément d'immobilisation (79) vers sa seconde position (792) et, d'autre part, un appareil d'actionnement (131) qui est commandé pour déplacer l'élément d'immobilisation (79) dans sa première position (791).

12. Installation selon la revendication 11, **caractérisée en ce que** l'appareil d'actionnement (131) est porté par le support (50) et comprend :
- d'une part, un organe qui, appelé organe d'actionnement (132), est disposé pour agir sur l'élément d'immobilisation (79) à travers au moins l'une des perforations de la paroi de la seconde partie (75) et déplacer cet élément d'immobilisation (79) de sa seconde position (792) vers sa première position (791),
- d'autre part, un autre organe, qui appelé organe moteur (133), est de type commandé et est associé à l'organe d'actionnement (132) pour pouvoir le déplacer de manière telle, d'une part, qu'il pousse l'élément d'immobilisation (79) de sa seconde position (792) vers sa première position (791) et d'autre part, qu'il autorise le déplacement inverse de cet organe d'immobilisation (79) sous l'effet de l'organe élastique (130) qui le sollicite.

13. Installation selon la revendication 12, **caractérisée en ce que** les deux perforations qui sont réalisées dans la paroi de la seconde partie (75) du poussoir (7) pour former les deux butées que sont la butée de contraction (770) et la butée d'extension (780), sont reliées par une rainure (14) et cette rainure (14), d'une part, est orientée selon l'axe de coulissement (76) et, d'autre part, a une dimension transversale ajustée à celle d'une partie mâle qui, appelée seconde partie mâle (1321), est portée par l'organe d'actionnement (132) de l'élément d'immobilisation (79) de manière telle que, lorsqu'il actionne l'élément d'immobilisation (79) dans sa première position (791), ladite seconde partie mâle (1321) coopère, d'une part, avec une portée femelle (7931) aménagée axialement dans la première partie mâle (793) de l'élément d'immobilisation (79) et, d'autre part, avec la rainure, et par cela, garantit à la fois :
- l'immobilisation en translation de la première partie (74) par rapport au support fixe (50), et
- l'orientation relative de la première partie (74) et de la seconde partie (75) autour de l'axe de coulissement (76), et ce, au moins entre la situation de contraction (77) et la situation d'extension (78) des deux parties coulissantes (74), (75).

## Claims

1. Installation (1) for sequential loading of bars of material, referred to as bars (2), in a spindle (3) of a machine (4) for machining these bars (2), the installation (1) comprising an elongated element, referred to as pusher (7), which :
- has an end, referred to as front end (8), which is intended to exert an action on one of the opposite ends of a bar (2), referred to as first end (201), in order to be able to ensure the translatory movement of this bar (2),
- is placed under the control of a device referred to as first device (9) and capable of ensuring the translatory movement of this pusher (7) in two opposite directions, referred to as first direction (91) and second direction (92), in such a way as to move the front end (8), in the first direction (91), towards the interior of the machine (4) or, in the second direction (92), towards the interior of the installation (1) and be able
• in the first direction (91), bring this front end (8) into contact with the first end (201) of a bar (2), aligned beforehand with the pusher (7) and ensure a contact with this first end (201), so that at the latest after the bar (2) has been engaged by another end, referred to as second end, through the entrance (100) of a passage (10) that the machine (4) has in the alignment of its spindle (3) and up into a component of the spindle (3), referred to as spindle nose (30), and at the level of which said bar (2) can be held tightly with a view to allowing the machining of a portion (20) which exceeds this spindle nose (30),
• also in the first direction (91), to move sequentially the front end (8) in such a way as to move the bar (2) by a fraction of its length, in particular so that the products (11) can be successively machined then taken from this bar (2),
• in the second direction, to extract from the machine (4) the front end (8) of the pusher (7) in a manner so as to allow, afterwards, a new movement of the front end (8) in the first direction (91) towards a first end (201) of a new bar (2), preloaded, i.e. aligned beforehand on this front end (8) with a view to a new cycle of operations of loading and of movement of a bar (2),
the pusher (7) comprising at least one first part (74) which has the front end (8) and a second part (75) that is connected to the first device (9) and these two parts, referred to together as sliding parts (74), (75), are mounted sliding one in the other in such a way as to be mobile, one with respect to the other, along an axis referred to as sliding axis (76), and this between two states which are
• a first state which, referred to as state of contraction (77), corresponds to a state in which one (74) of said sliding parts (74), (75) is retracted in the other (75), conferring to the pusher (7) a usable length for moving the front end (8) between the entrance (100) of the passage (10) aligned on the spindle (3) and the spindle nose (30), which is of minimal size, and
• a second state which, referred to as state of extension (78), corresponds to a state in which one (74) of said sliding parts (74), (75) extends partially outside the other (75), and this over a distance of extension (D2) the value of which is predetermined, conferring to the pusher (7) a usable length of a maximal value,
this installation being **characterised in that**:
- the sliding parts (74), (75) are placed under the control of a control device, referred to as second device (12), which makes it possible to influence the transition of the pusher (7) from its state of contraction (77) to its state of extension (78), and, reciprocally,
- the first device (9) and the second device (12) are placed under the control of a control device, referred to as third device (13), which allows at least at the start of one of the two operations which are, on the one hand, the operation of loading of the bar (2) into the machine (4) and, on the other hand, and operation of movement of the bar (2) in said machine (4) by a value, referred to as first value, necessary to achieve a product (11), taking into account the effective length of this bar (2) during the operation under consideration and of verification by calculation of whether the usable length of the pusher (7) under consideration in state of contraction (77) is sufficient to ensure at least one of the two operations consisting of
• moving the bar (2) to bring its second end (202) substantially up into the spindle nose (30), and
• moving the bar (2) by a fraction of its length which corresponds to the value necessary to achieve a product (11), and
if the usable length of the pusher in state of contraction (77) is of a sufficient value, then maintaining such a state of contraction (77) and, on the contrary, if the usable length is insufficient, then activating the relative translation of the sliding parts (74), (75) of the pusher (7) to obtain the state of extension (78) of this pusher (7).

2. Installation according to claim 1, **characterised in that**:
- on the one hand, it (1) is equipped with a functional means, on the one hand, of measuring the length of each bar (2) which has to be moved by the pusher (7), and, on the other hand, of producing a signal reflecting the measured length of this bar (2), and
- on the other hand, the third device (13) is itself designed in a manner
• to use the signal reflecting the measured length of a bar (2) to be loaded in the machine (4), and this, to calculate the effective length of this bar (2) depending upon the number of products (11) taken from said bar (2),
• to use a piece of information reflecting the value of the distance which separates the entrance (100) of the passage (10) aligned on the spindle (3) and the spindle nose (30), i.e. the value of the loading distance (D1),
• to use a piece of information reflecting the value of the usable length of the pusher (7) during a given operation, i.e. the maximal value or the minimal value according to which the pusher is in state of extension (78) or in state of contraction (77).

3. Installation according to claim 1 or 2, **characterised in that** the second device (12) makes it possible to influence the transition of the pusher (7) from one of its two states referred to as state of contraction (77) and state of extension (78) by impeding or allowing the relative translation of these sliding parts (74), (75) under the effect of external actions which tend to bring about relative displacements of said sliding parts (74), (75).

4. Installation according to one of the claims 1 to 3, **characterised in that** to allow the pusher (7) to adopt the extension state (78), the first device (9) and the second device (12) are placed under the control of a control device, referred to as third device (13), which makes it possible to control them in such a way that they ensure at least the following operational phases:
- a first operational phase in the course of which, on the one hand, the front end (8) being situated outside the machine (4) and, on the other hand, the second part (75) of the pusher (7) being in state of contraction (77) and fixed in this position, the pusher (7) is displaced in the first direction (91) in order to bring the front end (8) in contact with the first end (201) of the bar (2),
- a second operational phase in the course of which the bar (2) is moved in the machine (4) at least until attaining a value of displacement at least equal to the distance of extension (D2) of the first part (74) and of the second part (75) of the pusher (7),
- a third operational phase in the course of which the two sliding parts (74), (75) are released in relative translation, but the first part (74) of the pusher (7) is fixed in translation relative to a support (50) which is fixed with respect to the pusher (7),
- a fourth operational phase in the course of which the displacement of the pusher (7) is ordered in the second direction (92) in order to bring about a relative displacement of the sliding parts (74), (75) until their state of extension (78),
- a fifth operational phase in the course of which, the sliding parts (74), (75) being placed in state of extension (78), these sliding parts (74), (75) are fixed in relative translation,
- a sixth operational phase in the course of which the pusher (7) is displaced in such a way as to resume supply of the machine (4).

5. Installation according to any one of the claims 1 to 4, **characterised in that** the third device (13) makes it possible to control the first device (9) and the second device (12) in such a way that at least one of the operations consisting of
• to displace the bar (2) to bring its second end (202) substantially up into the spindle nose (30), and
• to displace the bar (2) by a fraction of its length which corresponds to the necessary value to achieve a product (11),
is followed by an operation consisting of displacing the pusher (7) in the second direction (92) by a predetermined value (R) at least sufficient to prevent the contact between the first end (201) of the bar (2) and the front end (8) of the pusher (7).

6. Installation according to any one of the claims 4 to 5, **characterised in that** the third device (13) controls the first device (9) and the second device (12) in such a way that they ensure at least the following operational phases:
- a seventh operational phase in the course of which the pusher (7) is moved in the second direction (92) with a view to extracting the front end (8) from the machine (4),
- an eighth operational phase in the course of which the sliding parts (74), (75) are released in relative translation, but the first part (74) of the pusher (7) is fixed with respect to the support (50),
- a ninth operational phase in the course of which the displacement of the pusher (7) is controlled in the first direction (91) in order to bring about, on the one hand, a relative displacement of the sliding parts (74), (75) until their state of contraction (77) and, on the other hand, the relative immobilization of these sliding parts (74), (75) in this state of contraction (77),
- a tenth operational phase in the course of which the pusher (7) is moved in the second direction (92) in such a way as to be repositioned in a position permitting a new cycle of loading of a bar (2) in the machine (4), i.e. the position from which it is moved in the course of the first operational phase.

7. Installation according to claim 6, **characterised in that** the third device (13) controls the first device (9) and the second device (12) in such a way that they ensure at least an eleventh operational phase which is situated between the seventh operational phase and the tenth operational phase, and according to which the front end (8), which bears a gripper, is placed at a station referred to as ejection station (not shown) at the level of which the unusable remnant end of bar (2) can be extracted from said gripper.

8. Installation according to any one of the claims 4 to 7, **characterised in that** the third device (13) controls the first device (9) and the second device (12) in such a way as to fix, during the third operational phase, the first part (74) of the pusher (7) with respect to the support (50).

9. Installation according to any one of the claims 4 to 8, **characterised in that** the third device (13) controls the first device (9) and the second device (12) in such a way as to fix, during the eighth operational phase, the first part (74) of the pusher (7) with respect to the support (50) and release the two sliding parts (74), (75) in relative translation.

10. Installation according to any one of the claims 1 to 9**, characterised in that** to achieve the second device (12):
- one of the sliding parts (74), (75) bears at least two stops, referred to together as stops exercising a function of stop in translation along the sliding axis (76), and these stops, one called contraction stop (770) and the other extension stop (780), are disposed with a certain spacing apart (D3) to define each one, or respectively the contraction state (77) and the extension state (78),
- the other sliding part is equipped with an element, referred to as immobilization element (79), intended to co-operate selectively with the contraction stop (770) and the extension stop (780) in such a way as to fix the two sliding parts (74), (75), one with respect to the other,
- the immobilization element (79) is
• retractable between a first position (791) in which it permits the relative sliding of the two sliding parts (74), (75) and a second position (792) in which it can co-operate, through a male part, referred to as first male part (793), with one of the two stops which are the contraction stop (770) and the extension stop (780) and thus impede the relative sliding of said sliding parts (74), (75),
• connected to an actuation means (1300) between, on the one hand, the second position (792) in which it co-operates with one of the two stops, which are the contraction stop (770) and the extension stop (780), to thus impede the relative sliding of the sliding parts (74), (75) and, on the other hand, the first position (791) where it is released from any one of said stops to thus allow the sliding of the two sliding parts (74), (75).

11. Installation according to claim 10, **characterised in that**:
- the sliding parts (74), (75), i.e. the first part (74) and the second part (75) are made up of at least partially hollow pieces, the first part (74) being mounted sliding in the second part (75),
- the second part (75) bears the two stops which are the contraction stop (770) and the extension stop (780); and each of these two stops is made up of the lateral face of a perforation made in the wall of said second part (75) in such a way as to constitute a stop in translation along the sliding axis (76),
- the first part (74) accommodates internally the immobilization element (79) in a way such that this immobilization element (79) is mobile in a plane radial to the sliding axis (76), and this between the two positions referred to as first position (791) and second position (792), which are
• a first position (791) in which it does not co-operate with either of the two stops which are the contraction stop (770) and the extension stop (780) and thus allows the relative sliding of the two sliding parts (74), (75), and
• a second position (792) in which it co-operates with one of the two stops and thus impedes the relative sliding of said first part (74) and second part (75),
- the actuation means (1300) comprises, on the one hand, an elastic element (130) which pulls the immobilization element (79) toward its second position (792) and, on the other hand, an actuation device (131) which is controlled to displace the immobilization element (79) into its first position (791).

12. Installation according to claim 11, **characterised in that** the actuation device (131) is borne by the support (50) and comprises:
- on the one hand, an element which, referred to as actuation element (132), is disposed to act upon the immobilization element (79) through at least one of the perforations of the wall of the second part (75) and displace this immobilization element (79) from its second position (792) toward its first position (791),
- on the other hand, another element, which is called motor element (133), is of controlled type and is connected to the actuation element (132) in order to be able to displace it in a way such that, on the one hand, it pushes the immobilization element (79) from its second position (792) towards its first position (791), and, on the other hand, it allows the opposite movement of this immobilization element (79) under the effect of the elastic element (130) that pulls it.

13. Installation according to claim 12, **characterised in that** the two perforations which are made in the wall of the second part (75) of the pusher (7) to form the two stops, which are the contraction stop (770) and the extension stop (780), are connected by a groove (14), and this groove (14), on the one hand, is aligned along the sliding axis (76), and, on the other hand, has a transverse dimension adapted to that of a male part, referred to as second male part (1321), which is borne by the actuation element (132) of the immobilization element (79) in a way such that, when it actuates the immobilization element (79) in its first position (791), said second male part (1321) co-operates, on the one hand, with a female bearing area (7931) provided axially in the first male part (793) of the immobilization element (79) and, on the other hand, with the groove, and by this ensures, at one and the same time:
- the immobilization in translation of the first part (74) with respect to the fixed support (50), and
- the relative alignment of the first part (74) and of the second part (75) about the sliding axis (76), and this, at least between the contraction state (77) and the extension state (78) of the two sliding parts (74), (75).

## Patentansprüche

1. Vorrichtung (1) zum sequenziellen Zuführen von Materialstangen, genannt Stangen (2), in einen Steckerstift (3) einer Maschine (4) für die Bearbeitung dieser Stangen (2), wobei die Vorrichtung (1) ein verlängertes Organ umfasst, das, genannt Drücker (7):
- ein Ende aufweist, das, genannt vorderes Ende (8), dazu vorgesehen ist, eine Wirkung auf eines der gegenüberliegenden Enden einer Stange (2), genannt erstes Ende (201), auszuüben, um die translatorische Bewegung dieser Stange (2) sicherstellen zu können,
- unter die Kontrolle einer Vorrichtung, genannt erste Vorrichtung (9), gestellt wird und dazu in der Lage ist, die translatorische Bewegung dieses Drückers (7) in zwei entgegengesetzte Richtungen, genannt erste Richtung (91) und zweite Richtung (92) sicherzustellen, um das vordere Ende (8) in der ersten Richtung (91) gegen das Innere der Maschine (4) oder, in der zweiten Richtung (92), gegen das Innere der Vorrichtung (1) zu bewegen und dazu in der Lage zu sein,
. in der ersten Richtung (91) dieses vordere Ende (81) in Kontakt mit dem ersten Ende (201) einer Stange (2) zu bringen, die im Voraus mit dem Drücker (7) ausgerichtet wurde, und einen Kontakt mit diesem ersten Ende (201) sicherzustellen, damit spätestens, nachdem die Stange (2) durch ein anderes Ende, genannt zweites Ende (202), durch den Eingang (100) einer Passage (10), die die Maschine (4) in der Ausrichtung mit ihrem Steckerstift (3) aufweist, und bis zu einem Bestandteil des Steckstifts (3), genannt Stiftvorsprung (30), eingeführt wurde und auf der Ebene dessen die Stange (2) fest beibehalten werden kann, um die Bearbeitung eines Abschnitts (20), der diesen Stiftvorsprung (30) überschreitet, zu ermöglichen.
. auch in der ersten Richtung (91) sequenziell das vordere Ende (8) zu bewegen, um die Stange (2) um einen Abschnitt ihrer Länge zu bewegen, insbesondere, damit Produkte (11) nacheinander bearbeitet und dann von dieser Stange (2) entnommen werden können,
. in der zweiten Richtung (92) aus der Maschine (4) das vordere Ende (8) des Drückers (7) zu entnehmen, um dann eine neue Bewegung des vorderen Endes (8) in der ersten Richtung (91) auf ein erstes Ende (201) einer neuen Stange (2) hin zuzulassen, die vorbeladen ist, d.h. im Voraus mit diesem vorderen Ende (8) ausgerichtet ist, um einen neuen Zyklus von Zufuhr- und Bewegungsvorgängen einer Stange (2) zu beginnen,
wobei der Drücker (7) mindestens einen ersten Teil (74) enthält, der das vordere Ende (8) aufweist, und einen zweiten Teil (75), der mit der ersten Vorrichtung (9) verbunden ist, und diese zwei Teile, zusammen Gleitteile (74), (75) genannt, so gleitend ineinander montiert sind, dass sei im Bezug zueinander entlang einer Achse, genannt Gleitachse (76) beweglich sind, und dies zwischen zwei Stellungen, davon
. eine erste Stellung, die, genannt Verkürzungsstellung (77), einer Stellung entspricht, in der einer (74) der Gleitteile (74), (75), in den anderen (75) zurückgezogen ist und dem Drücker (7) eine Länge verleiht, die verwendet werden kann, um das vordere Ende (8) zwischen dem Eingang (100) der Passage (10), die mit dem Steckstift (3) ausgerichtet ist, und dem Stiftvorsprung (30), der einen minimalen Wert aufweist, zu bewegen, und
. eine zweite Stellung, die, genannt Verlängerungsstellung (78), einer Stellung entspricht, in der ich einer (74) der Gleitteile (74), (75) teilweise außerhalb des anderen (75) erstreckt, und dies auf einer Verlängerungsstrecke (D2), deren Wert vorbestimmt ist und dem Drücker (7) eine verwendbare Länge mit einem maximalen Wert verleiht,
wobei diese Vorrichtung **dadurch gekennzeichnet ist, dass**:
- die Gleitteile (74), (75) unter die Kontrolle einer gesteuerten Vorrichtung gestellt werden, die, genannt zweite Vorrichtung (12), es ermöglicht, den Übergang des Drückers (7) aus seiner Verkürzungsstellung (77) in seine Verlängerungsstellung (78) und umgekehrt zu beeinflussen,
- die erste Vorrichtung (9) und die zweite Vorrichtung (12) unter die Kontrolle einer Steuervorrichtung gestellt werden, die, genannt dritte Vorrichtung (13), mindestens am Ende eines der zwei Vorgänge, d.h. einerseits des Vorgangs der Zufuhr der Stange (2) in die Maschine (4) und andererseits eines Vorgangs der Bewegung der Stange (2) in der Maschine (4) um einen Wert, genannt erster Wert, der erforderlich ist, um ein Produkt (11) herzustellen, ermöglicht, die effektive Länge dieser Stange (2) bei dem in Betracht gezogenen Vorgang zu berücksichtigen und durch Berechnung sicherzustellen, ob die verwendbare Länge des Drückers (7), die in der Verkürzungsstellung (77) berücksichtigt wird, ausreichend ist, um mindestens einen der zwei Vorgänge sicherzustellen, d.h.
. die effektive Bewegung der Stange (2), um ihr zweites Ende (202) im Wesentlichen bis zum Stiftvorsprung zu bringen (30), und
. die effektive Bewegung der Stange (2) um einen Abschnitt ihrer Länge, der dem Wert entspricht, der erforderlich ist, um ein Produkt (11) herzustellen, und
wenn die verwendbare Länge des Drückers in der Verkürzungsstellung (7) einen auseichenden Wert aufweist, Bewahrung einer derartigen Verkürzungsstellung (77), und, andernfalls, wenn die verwendbare Länge nicht ausreichend ist, Steuerung des relativen Übergangs der Gleitteile (74), (75) des Drückers, um die Verlängerungsstellung (78) dieses Drückers (7) zu erzielen.

2. Vorrichtung nach Anspruch 1, **dadurch gekennzeichnet, dass:**
- sie (1) einerseits mit einem funktionellen Mittel ausgestattet ist, um einerseits die Länge jeder Stange (2) zu messen, die vom Drücker (7) bewegt werden muss, und um andererseits ein Signal zu erzeugen, das die gemessene Länge dieser Stange (2) wiedergibt, und
- andererseits die dritte Vorrichtung (13) ihrerseits so ausgestattet ist, um
. das Signal auszuwerten, das die gemessene Länge einer Stange (2), die in die Maschine (4) geladen werden soll, wiedergibt, und dies, um die effektive Länge dieser Stange (2) je nach der Anzahl der Produkte (11) zu berechnen, die der Stange (2) entnommen werden,
. eine Information auszuwerten, die den Wert der Strecke widerspiegelt, die den Eingang (100) der Passage (10), die mit dem Steckstift (3) ausgerichtet ist, und den Stiftvorsprung (30) trennt, d.h. den Wert der Zufuhrstrecke (D1),
. eine Information auszuwerten, die den Wert der verwendbaren Länge des Drückers (7) bei einer gegebenen Stellung widerspiegelt, d.h. den maximalen Wert oder den minimalen Wert, je nachdem, ob sich der Drücker in der Verlängerungsstellung (79) oder in der Verkürzungsstellung (77) befindet.

3. Vorrichtung nach Anspruch 1 oder 2, **dadurch gekennzeichnet, dass** die zweite Vorrichtung (12) es ermöglicht, den Übergang des Drückers (7) aus einer seiner zwei Stellungen, genannt Verkürzungsstellung (77) und Verlängerungsstellung (78) zu beeinflussen, indem der relative Übergang dieser Gleitteile (74), (75) unter der Einwirkung von äußeren Vorgängen behindert oder zugelassen wird, die dazu neigen, relative Bewegungen der Gleitteile (74), (75) zu erzeugen.

4. Vorrichtung nach einem der Ansprüche 1 bis 3, **dadurch gekennzeichnet, dass**, um zu ermöglichen, dass der Drücker (7) die Verlängerungsstellung (78) einnimmt, die erste Vorrichtung (9) und die zweite Vorrichtung (12) unter die Kontrolle einer Steuervorrichtung gestellt werden, die, genannt dritte Vorrichtung (13), es ermöglicht, sie so zu steuern, dass sie mindestens die folgenden funktionellen Phasen sicherstellen:
- eine erste funktionelle Phase, im Laufe derer der Drücker (7) in die erste Richtung (91) bewegt wird, um das vordere Ende (8) in Kontakt mit dem ersten Ende (201) der Stange (2) zu bringen, wobei sich einerseits das vordere Ende (8) außerhalb der Maschine (4) und andererseits der zweite Teil (75) des Drückers (7) in der Verkürzungsstellung (77) befindet und in dieser Stellung blockiert ist,
- eine zweite funktionelle Phase, im Laufe derer die Stange (2) in die Maschine (4) bewegt wird, bis sie mindestens einen Bewegungswert erreicht, der mindestens gleich der Verlängerungsstrecke (D2) des ersten Teils (74) und des zweiten Teils (75) des Drückers (7) ist,
- eine dritte funktionelle Phase, im Laufe derer die zwei Gleitteile (74), (75) in relativem Übergang freigegeben werden, aber der erste Teil (74) des Drückers (7) wird im Übergang bezüglich eines Trägers (50), der hinsichtlich des Drückers (7) befestigt ist; blockiert,
- eine vierte funktionelle Phase, im Laufe derer die Bewegung des Drückers (7) in die zweite Richtung (92) gesteuert wird, um eine relative Bewegung der Gleitteile (74), (75) bis in ihre Verlängerungsstellung (78) hervorzurufen,
- eine fünfte funktionelle Phase, im Laufe derer die Gleitteile (74), (75), die in der Verlängerungsstellung (78) angeordnet sind, in relativem Übergang blockiert werden,
- eine sechste funktionelle Phase, im Laufe derer der Drücker (7) so bewegt wird, dass er die Versorgung der Maschine (4) wieder aufnimmt.

5. Vorrichtung nach einem der Ansprüche 1 bis 4, **dadurch gekennzeichnet, dass** die dritte Vorrichtung (13) es ermöglicht, die erste Vorrichtung (9) und die zweite Vorrichtung (12) so zu steuern, dass mindestens einer der folgenden Vorgänge, d.h.
. die effektive Bewegung der Stange (2), um ihr zweites Ende (202) im Wesentlichen bis zum Stiftvorsprung zu führen (30), und
. die effektive Bewegung der Stange (2) um einen Abschnitt ihrer Länge, der dem Wert entspricht, der erforderlich ist, um das Produkt (11) herzustellen,
von einem Vorgang gefolgt wird, der darin besteht, den Drücker (7) in der zweiten Richtung (92) um einen Wert (R) zu bewegen, der vorbestimmt und mindestens ausreichend ist, um den Kontakt zwischen dem ersten Ende (201) der Stange (2) und dem vorderen Ende (8) des Drückers (7) zu beseitigen.

6. Vorrichtung nach einem der Ansprüche 4 bis 5, **dadurch gekennzeichnet, dass** die dritte Vorrichtung (13) die erste Vorrichtung (9) und die zweite Vorrichtung (12) so steuert, dass sie mindestens die folgenden funktionellen Phasen sicherstellen:
- eine siebte funktionelle Phase, im Laufe derer der Drücker (7) in die zweiten Richtung (92) bewegt wird, um das vordere Ende (8) aus der Maschine (4) zu entnehmen,
- eine achte funktionelle Phase, im Laufe derer die Gleitteile (74), (75) in relativem Übergang freigegeben werden, aber der erste Teil (74) des Drückers (7) wird bezüglich des Trägers (50) blockiert,
- eine neunte funktionelle Phase, im Laufe derer die Bewegung des Drückers (7) in die erste Richtung (91) gesteuert wird, um einerseits eine relative Bewegung der Gleitteile (74), (75) bis in ihre Verkürzungsstellung (77) und andererseits die relative Blockierung dieser Gleitteile (74), (75) in dieser Verkürzungsstellung (77) hervorzurufen.
- eine zehnte funktionelle Phase, im Laufe derer der Drücker (7) so in die zweite Richtung (92) bewegt wird, dass er in einer Stellung neu angeordnet wird, die einen neunen Zufuhrzyklus einer Stange (2) in die Maschine (4) ermöglicht, d.h. die Stellung, aus der er im Laufe der ersten funktionellen Phase bewegt wird.

7. Vorrichtung nach Anspruch 6, **dadurch gekennzeichnet, dass** die dritte Vorrichtung (13) die erste Vorrichtung (9) und die zweite Vorrichtung (12) so steuert, dass sie mindestens eine elfte funktionelle Phase sicherstellen, die sich zwischen der siebten funktionellen Phase und der zehnten funktionellen Phase befindet, und gemäß der das vordere Ende (8), das eine Zange trägt, an einer Stelle, genannt Ausstoßstelle (nicht dargestellt), angebracht ist, auf deren Ebene der Abschnitt der Stange (2), der nicht verwendet werden kann, aus der Zange entnommen werden kann.

8. Vorrichtung nach einem der Ansprüche 4 bis 7. **dadurch gekennzeichnet, dass** die dritte Vorrichtung (13) die erste Vorrichtung (9) und die zweite Vorrichtung (12) so steuert, dass während der dritten funktionellen Phase der erste Teil (74) des Drückers (7) bezüglich des Trägers (50) blockiert wird.

9. Vorrichtung nach einem der Ansprüche 4 bis 8, **dadurch gekennzeichnet, dass** die dritte Vorrichtung (13) die erste Vorrichtung (9) und die zweite Vorrichtung (12) so steuert, dass während der achten funktionellen Phase der erste Teil (74) des Drückers (7) bezüglich des Trägers (50) blockiert wird und die zwei Gleitteile (74), (75) in relativem Übergang freigegeben werden.

10. Vorrichtung nach einem der Ansprüche 1 bis 9, **dadurch gekennzeichnet, dass,** um die zweite Vorrichtung (12) herzustellen,
- einer der Gleitteile (74), (75) mindestens zwei Anschläge trägt, zusammen genannt Anschläge, die eine translatorische Stoppfunktion gemäß der Gleitachse (76) ausüben, wobei diese Anschläge, der eine genannt Verkürzungsanschlag (770) und der andere Verlängerungsanschlag (780), mit einem gewissen Abstand (D3) angebracht sind, um jeweils die Verkürzungsstellung (77) bzw. die Verlängerungsstellung (78) zu definieren,
- der andere Gleitteil mit einem Element, genannt Blockierungselement (79), ausgestattet ist, das dazu vorgesehen ist, selektiv mit dem Verkürzungsanschlag (770) und dem Verlängerungsanschlag (780) zusammenzuarbeiten, um die zwei Gleitteile (74), (75) in Bezug zueinander zu blockieren,
- das Blockierungselement (79)
. zwischen einer ersten Position (791), in der es das relative Gleiten der zwei Gleitteile (74), (75) zulässt, und einer zweiten Position (792) einziehbar ist, in der es durch einen Außenteil, genannt erster Außenteil (793), mit einem der zwei Anschläge, d.h. dem Verkürzungsanschlag (770) und dem Verlängerungsanschlag (780) zusammenarbeiten und so das relative Gleiten der Gleitteile (74), (75) behindern kann,
. mit einem Betätigungsmittel (1300) zwischen einerseits der zweiten Position (792), in der es mit einem der zwei Stoppanschläge, d.h. dem Verkürzungsanschlag (770) und dem Verlängerungsanschlag (760) zusammenarbeitet, um so das relative Gleiten der Gleitteile (74), (75) zu behindern und andererseits der ersten Position (791), in der es von einem der Anschläge freigegeben wird, um so das Gleiten der zwei Gleitteile (74), (75) zu ermöglichen, verbunden ist.

11. Vorrichtung nach Anspruch 10, **dadurch gekennzeichnet, dass:**
- die Gleitteile (74), (75), d.h. der erste Teil (74) und der zweite Teil (75) aus mindestens teilweise hohlen Teilen bestehen, wobei der erste Teil (74) gleitbar im zweiten Teil (75) montiert ist,
- der zweite Teil (75) die zwei Anschläge trägt, d.h. den Verkürzungsanschlag (770) und den Verlängerungsanschlag (780), und jeder dieser zwei Anschläge auf der Seitenfläche eine Durchlochung umfasst, die in der Wand des zweiten Teils (75) durchgeführt ist, um einen translatorischen Stoppanschlag entlang der Gleitachse (76) zu bilden,
- der erste Teil (74) im Inneren das Blockierungselement (79) so aufnimmt, dass dieses Blockierungselement (79) auf einer radialen Ebene zur Gleitachse (76) beweglich ist, und dies zwischen den zwei Stellungen, genannt erste Position (791) und zweite Position (792), d.h.
. einer ersten Position (791), in der es mit keinem der zwei Anschläge, d.h. dem Verkürzungsanschlag (770) und dem Verlängerungsanschlag (780), zusammenarbeitet und so das relative Gleiten der zwei Gleitteile (74), (75) zulässt, und
. einer zweiten Position (792), in der es mit einem der zwei Anschläge zusammenarbeitet und so das relative Gleiten des ersten Teils (74) und des zweiten Teils (75) behindert,
- das Betätigungsmittel (1300) umfasst einerseits ein elastisches Organ (130), das das Blockierungselement (79) in seine zweite Position (792) bringt und, andererseits, eine Betätigungsgerät (131), das gesteuert wird, um das Blockierungselement (79) in seine erste Stellung (791) zu bewegen.

12. Vorrichtung nach Anspruch 11, **dadurch gekennzeichnet, dass** des Betätigungsgerät (131) vom Träger (50) gestützt wird und Folgendes umfasst:
- einerseits ein Organ, genannt Betätigungsorgan (132), das angebracht ist, um auf das Blockierungselement (79) über mindestens eine der Durchlochungen der Wand des zweiten Teils (75) zu wirken und dieses Blockierungselement (79) aus seiner zweiten Position (792) in seine erste Position (791) zu bewegen,
- andererseits ein anderes Organ, genannt Antriebsorgan (133), das der gesteuerten Art ist und mit dem Betriebsorgan (132) verbunden ist, um es so verschieben zu können, dass es einerseits das Blockierungselement (79) aus seiner zweiten Position (792) in seine erste Position (791) schiebt, und andererseits die umgekehrte Bewegung dieses Blockierungsorgans (79) unter der Einwirkung des elastischen Organs (130), das dies verlangt, zulässt.

13. Vorrichtung nach Anspruch 12, **dadurch gekennzeichnet, dass** die zwei Durchlochungen, die in der Wand des zweiten Teils (75) des Drückers (7) durchgeführt sind, um die zwei Anschläge zu bilden, d.h. den Verkürzungsanschlag (770) und den Verlängerungsanschlag (780), durch eine Nut (14) verbunden sind, und diese Nut (14) einerseits entlang der Gleitachse (76) ausgerichtet ist und andererseits eine Querausdehnung aufweist, die an diejenige eines Außenteils angepasst ist, der, genannt zweiter Außenteil (1321), vom Betriebsorgan (132) des Blockierungselements (79) so getragen wird, dass, wenn er das Blockierungselement (79) in seiner ersten Position (791) betätigt, der zweite Außenteil (1321) einerseits mit einem Innenbereich zusammenarbeitet, der axial im ersten Außenteil (793) des Blockierungselementes (79) angebracht ist, und andererseits mit der Nut und somit gleichzeitig Folgendes garantiert:
- die translatorische Blockierung des ersten Teils (74) bezüglich des befestigten Trägers (50), und
- die relative Ausrichtung des ersten Teils (74) und des zweiten Teils (75) um die Gleitachse (76), und dies mindestens zwischen der Verkürzungsstellung (77) und der Verlängerungsstellung (78) der zwei Gleitteile (74), (75).
